(19) Europäisches Patentamt
European Patent Office
Office européen des brevets

(11) Publication number: 0 409 403 B1

(12) # EUROPEAN PATENT SPECIFICATION

(45) Date of publication of patent specification: **02.08.95**

(51) Int. Cl.[6]: **C08G 8/04**, C09D 5/08, C23F 11/173, C10M 145/20, C10M 173/00, C10M 169/04

(21) Application number: **90306432.7**

(22) Date of filing: **13.06.90**

(54) **Composition providing surface protection.**

(30) Priority: **29.06.89 GB 8914952**

(43) Date of publication of application:
**23.01.91 Bulletin 91/04**

(45) Publication of the grant of the patent:
**02.08.95 Bulletin 95/31**

(84) Designated Contracting States:
**AT BE CH DE DK ES FR GB GR IT LI LU NL SE**

(56) References cited:
**EP-A- 0 276 063**
**EP-A- 0 311 452**
**GB-A- 790 644**
**US-A- 1 849 109**
**US-A- 2 429 905**
**US-A- 3 687 610**
**US-A- 4 238 379**

**Patent Abstract of Japan of JP-A-54 064 535**

**J. Am. Chem. Soc. (1988), 110, pages 634-635**

(73) Proprietor: **ZENECA LIMITED**
**15 Stanhope Gate**
**London W1Y 6LN (GB)**

(72) Inventor: **Holmes, Jeremy Mark**
**7 George Street**
**Prestwich,**
**Manchester M25 8WS (GB)**
Inventor: **Leeming, Stephen William**
**30 Lowther Gardens**
**Flixton,**
**Urmston,**
**Manchester M31 2RJ (GB)**

(74) Representative: **Mayall, John et al**
**Intellectual Property Group**
**Zeneca Specialties**
**P.O. Box 42**
**Hexagon House**
**Blackley**
**Manchester M9 8ZS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a composition, particularly one which can be coated onto the surface of a metal to improve the resistance of the metal surface to corrosion or which can be used as a lubricant to improve corrosion resistance and/or to provide anti-wear characteristics.

Metal surfaces which are exposed to weather are particularly vulnerable to corrosion and require protection. Corrosion of a metal may be reduced by coating the metal with an anti-corrosive coating composition, for example by coating iron and steel to reduce rusting.

Coating compositions which can be used to reduce corrosion frequently, but not always, are based on film forming organic polymeric materials. The coating compositions generally also contain a mixture of pigments and extender solids, at least one of which is effective in retarding corrosion of the substrate metal. Pigments containing lead, in particular red lead, and hexavalent chromium, for instance zinc potassium chromate, are efficient anti-corrosive pigments and have been widely used with success. However, there is a growing awareness of the toxicity of lead and hexavalent chromium and this has already lead to some replacement of these materials by alternative materials. This trend is expected to accelerate when alternative materials are developed which have a performance matching that of lead and hexavalent chromium. Zinc phosphate is considered non-toxic, and is extensively used as an anti-corrosive pigment. However, deficiencies in the performance of zinc phosphate are widely reported, in particular its inability to prevent rust creep from damage to the coating. Although slightly soluble metal salts of organic acids are extensively used as corrosion inhibiting additives in aqueous reservoir systems, surprisingly these materials are not widely used as corrosion inhibiting pigments in surface coating compositions. Pigments recently proposed as corrosion inhibitors in metal coating compositions, particularly for ferrous metals, include magnesium azelade (GB 15555468), zinc and lead 5-nitroisophthalates (GB 1531093), zinc cyanurate (US 4329381) and zinc and lead N-phenylglycinate (DE 3306064). Barium salts of hydroxy carboxylic acids such as salicylic acid, have also been proposed (US 4304707). However, barium salicylate is soluble in water at a level of greater than 10% w/w, and hence is liable to be leached from a coating containing barium salicylate. The salts of a divalent metal and a hydroxycarboxylic acid containing a fused ring system have also been disclosed as having corrosion inhibiting properties (EP 289155). Many of the foregoing metal salts are indicated to be very effective, and also to be useful in improving the performance of zinc phosphate when present at low levels.

In addition to the various metal salts which can be used as corrosion inhibitors, there have also been proposals to use organic compounds as corrosion inhibitors. Organic compounds proposed for use as corrosion inhibitors include oximes such as benzaldoxime (GB 1365291), salicylaldoxime, 2-hydroxy-5-alkylbenzaldoximes in which the alkyl group contains 7 to 13 carbon atoms (EP 125025), bis-oximes (EP 178850) and hydroxy oxime metal complexes (EP 206716), di- and tri-hydroxybenzene derivatives (GB 676632, GB 1045118, US 2429905 and EP 239288), alkenyl or alkyl succinic acid or anhydride and derivatives thereof (GB 1055337 and US 4326987) and polyesters and functionally terminated derivatives thereof (US 3415766, US 3574566 and EP 277711).

Although a wide range of materials have been proposed to provide corrosion inhibitors, it is still desirable to find systems which provide improved corrosion inhibition characteristics.

We have now found a class of organic compound which is useful in providing surface protection properties.

According to the present invention there is provided a composition which provides improved wear and corrosion resistance to metal surfaces which comprises

(a) a lubricant or a surface coating composition; and

(b) a condensate of a dihydroxybenzene with at least one aldehyde

wherein the lubricant is selected from a natural oil or natural grease, a petroleum refined product and a poly(oxyalkylene)glycol lubricant, the surface coating composition is or contains a film forming binder system and the condensate is of the type

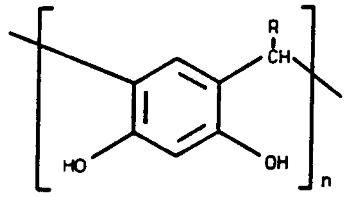

where

R is a hydrogen atom, or a hydrocarbyl, or a substituted hydrocarbyl, group which contains from 1 to 24 carbon atoms; n is an integer which is either 3 or 4 and the condensate is a macrocyclic compound.

Component a) of the coating composition may be a liquid in which component b) is dissolved or dispersed. If a liquid dispersant is used, this may include a suitable surfactant to aid dispersion of component b) in the liquid or may include as a co-solvent, a further liquid component in which component b) is soluble. Component a) may be a lubricating material such as an oil or a grease, for example liquid paraffin or a synthetic poly(oxyalkylene)glycol lubricant.

Alternatively, component a) is a surface coating composition, for example a film forming binder system. The film forming binder system which can be used as component (a) of the coating composition may be a paint (primer), a lacquer; a resin or other protective coating. Thus, component (a) may be a solvent-based surface coating composition, for example a cellulose/solvent based primer paint such as those used for car "touch-up" paints. The condensate which is component (b) of the coating composition is generally soluble to at least some extent in the solvents used for such primers and typically is added as a solid when being incorporated into such a primer paint system. Alternatively, component (a) may be an aqueous emulsion surface coating system, for example a primer or protective coating based on polymer latices such as for example acrylic and styrene/acrylic latices and vinyl/acrylic co-polymer latices including acrylate modified vinyl chloride - vinylidene chloride copolymer latices, and the condensate which is component (b) may be used as a dispersion or suspension in such aqueous systems. The surface coating composition may be an alkali-removable protective coating composition of the addition polymer type in which the polymer contains carboxyl groups.

The film forming binder system which may be used as component (a) of the composition preferably contains an organic polymer and in general any such polymer used in the paint industry may be included in the composition. Thus, the suitable film forming binders include, for example, an alkyd resin, an epoxy resin, an oleoresin, a latex rubber, a chlorinated rubber, a vinly resin such as polyvinylacetate or polyvinyl butyral, a polyurethane, a polyester, an organic or inorganic silicate, a polyamide or an acrylic polymer. It will be appreciated that the composition can include two or more compatible film forming polymers. The composition may also include an extender or plasticising resin, such as a hydrocarbon resin, or a coal tar derivative.

The film forming binder system which may be used as component (a) of the coating composition of the present invention can include homopolymers and copolymers of the following:

vinyl chloride

vinylidene chloride,

Vinyl esters of alkanoic acids having from 1 to 18 carbon atoms in the alkyl group, especially vinyl acetate,

alkyl acrylates and methacrylates having from 1 to 18 carbon atoms in the alkyl group, acrylamide and substituted acrylamides,

acrylonitrile, and methacrylonitrile,

monoethylenically unsaturated hydrocarbons, for example ethylene, isobutene, styrene and alpha-methyl styrene.

Example of polymers usable when component (a) is a film forming binder system are "acrylic polymers", by which is meant those polymers comprising predominantly units of alkyl acrylates and/or methacrylates having from 1 to 12 carbon atoms in the alkyl group, sometimes containing an acid functionally by virtue of containing polymerised units of one or more aliphatic unsaturated alpha-beta unsaturated carboxylic acids. Polymers of this type are described in European Patent Application No 0115694.

Other examples of polymers usable when component (a) is a film forming binder system are copolymers of (i) vinyl chloride, (ii) vinylidene chloride and (iii) one or more alkyl acrylates or alkyl methacrylates having from 1 to 12 carbon atoms in the alkyl group; such polymers may optionally also contain polymerised units of one or more aliphatic alpha-beta unsaturated carboxylic acids, Copolymers of this type are described generally and specifically in the specification of UK Patent No 1558411.

Alkyd containing resins are extensively used as the film forming binder in paint systems and we have obtained useful effects using compositions in which component (a) is a film forming binder system which is or contains an alkyd containing resin, particularly an oil-modified alkyd.

It is a preferred aspect of the present invention that component (a) is a film forming binder system which is, or which contains, an alkyd containing resin.

The polymer or polymers which is, or are, used when component (a) is a film forming binder system, is usually used in an amount of from 5 to 60% (based on weight in grams of the polymers per $100cm^3$ of the composition), and more usually 10 to 40%. The polymer may be dissolved or colloidally dispersed (that is

exist as an emulsion, with an average particle size usually below two micrometres) in a suitable liquid carrier medium.

Component (a) may be any material which can be contacted with a surface either to provide a coating thereon or to provide lubrication. Thus, component (a) may be a natural oil or natural grease which has been derived from animals or plants, such as, for example, lanolin or rape seed oil. Alternatively, component (a) may be a petroleum refined product such as a lubricating oil, turbine oil, fuel oil, gasoil or grease, which are used in circumstances in which they contact, and coat, if only temporarily, a metal surface. Component (a) may be a synthetic material for example a poly(oxyalkylene)glycol of the type which can be used as a lubricant.

The group R may be, or may include, an aryl group. However, it is generally preferred that R is, or contains, an alkyl group. The group R may be unsaturated, for example as in an alkene or alkyne group and may contain more than one saturated bond. If the group R is substituted, the substituent groups are typically hydrocarbonoxy, acyl, acyloxy (that is an ester group), halogen (for example as in a trifluoromethyl group) or nitrile. It is preferred that R is an unsubstituted alkyl group. The group R preferably contains at least 4, and especially at least 6, alkyl carbon atoms. Typically the group R contains not more than 20 carbon atoms, for example 12 or 14 carbon atoms. The condensate may be one which contains different groups R, for example resulting from the use of a mixture of aldehydes. The group R may be a mixture containing, for example, from 12 to 14 carbon atoms.

The condensate is a macrocyclic compound, especially a cyclic tetramer. Compounds of this type, and the preparation thereof, are described in J. Am. Chem. Soc (1988), Vol 110, at pages 634-635 and the papers referred to therein. The condensate is preferably one in which the -OH groups on the benzene rings are all orientated in the same direction and lie on the same side of the molecule, Correspondingly each of the groups R is orientated in the same general direction away from the -OH groups.

The solubility of the condensates in various solvents is dependent primarily on the nature of the group R. The solubility in non-polar solvents increases as the number of carbon atoms in the group R increases and conversely the solubility in polar solvents decreases as the number of carbon atoms in the group R increases. Depending on the group R, suitable solvents include methanol, ethanol, acetone, chloroform, toluene and hexane. Hydrocarbon solvents such as hexane are especially suitable for components having a large group R that is compounds in which R contains at least 6 carbon atoms.

The condensates are prepared by reacting the dihydroxybenzene with the aldehyde in the presence of an acid.

The process is preferably effected in the presence of a liquid medium which is a solvent for at least one, and preferably both of the reactants. The liquid medium is preferably one in which the reaction product is of low solubility at low temperatures, for example 10 °C or preferably about 0 °C. An alkanol, for example ethanol, is a suitable liquid medium.

The reaction is preferably effected at an elevated temperature, for example at least 30 °C and preferably not more than 120 °C. The reaction is conveniently effected at the reflux temperature of the liquid medium in which the reaction is being carried out. Using ethanol under reflux conditions the reaction temperature is typically up to 78 °C, depending on the concentration of the reactants and the acid.

The dihydroxybenzene and aldehyde are typically reacted together in essentially stoichiometric proportions, particularly from 0.9 to 1.1 moles of dihydroxybenzene for each mole or aldehyde.

The acid used is preferably a strong inorganic acid. Preferably the acid is non-oxidising acid, for example hydrogen chloride which is conveniently used at a concentration of at least 30% weight.

The compositions of the present invention, particularly when component (a) is a surface coating composition, can be coated onto a metal and we have found that the coated surface has an increased resistance to corrosion. The compositions are suitable for the corrosion inhibition of iron, zinc, copper, tin and aluminium, particularly mild steel and the zinc surface of galvanised steel. Particularly useful corrosion resistance can be obtained when component (a) is a film forming binder system which is, or which contains, an alkyd containing resin.

The use of the composition of the present invention to provide a corrosion inhibiting coating may be combined with a conventional corrosion inhibition treatment such as, for example, the phosphating of iron. Furthermore, the composition may include, in addition to the condensate, other materials, particularly those which have been proposed as corrosion inhibitors. Thus, the composition may include a metal oxide or as an alternative to, or in addition to, the metal oxide, the composition may also include a metal phosphate, particularly a phosphate of the metal which is present in the metal oxide.

Thus, as a further aspect of the present invention the composition may also include at least one of a metal oxide and a metal phosphate.

The composition of the present invention may be a lubricant composition in which component (a) is a lubricating oil or a grease. We have found that such compositions give improved anti-wear characteristics when used in contact with moving metal surfaces.

The composition of the present invention typically contains from 0.1 to 30% by weight of the condensate relative to the total volume of the composition and preferably the condensate is present in an amount of 0.1 to 5% w/w. If component (a) of the composition is an emulsion of a film forming binder system in a liquid medium, the condensate which is component (b) may give a useful effect when dispersed in the emulsion in an amount of from 0.1 to 15% w/w. If the composition is a lubricant composition the condensate is typically present in such a composition in an amount of from 0.1 up to 10% wt/wt, preferably from 0.5 to 6% wt/wt.

In addition to the condensate and the liquid solvent or dispersant or the surface coating composition, the composition of the present invention may include various other ingredients such as those commonly employed in the film forming coating compositions such as defoamers, rheology control agents, thickeners, dispersing and stabilising agents (usually surfactants), wetting agents, extenders, fungicides, pigments or colorants of one sort or another, coalescing solvents, plasticisers, and anti-freeze agents. Furthermore, as noted previously herein, the composition may also include one or more known corrosion inhibitors.

The composition of the present invention may be prepared using any one of the techniques which have been used for incorporating solids into a liquid or plastic medium in which the solid is essentially insoluble. Thus, if component (a) is a film forming coating composition, techniques for preparing paint compositions may be used, for example by mixing components either in a grinding apparatus or pre-mixing the components and then grinding. The condensate and any optional metal oxide, metal phosphate or other corrosion inhibitor, may be incorporated into the surface coating composition at any convenient stage, for example during the grinding together of the components of the paint formulation.

As noted previously herein, the composition of the present invention may be coated onto a metal to provide a corrosion inhibiting coating on the metal.

Thus, as a further aspect of the present invention there is provided a process which comprises coating at least part of a surface of a metal with a composition as hereinbefore defined.

The process of the present invention results in a coated surface which typically has an increased resistance to corrosion and is especially suitable for the corrosion inhibition of iron, zinc, copper, tin and aluminium, particularly mild steel and the zinc surface of a galvanised steel.

The composition may be applied to the metal surface in conventional manner, for example by dipping, spraying or brushing. The temperature of the application may be any suitable temperature for example from 0 to 50 °C.

The metal surface which is coated with the composition may be brightly polished and/or freshly cleaned, but a lightly rusted surface may be coated by the process of the present invention. Thus the composition may be coated onto a surface in an "as received" condition, and it may be unnecessary for the surface to be freshly cleaned or brightly polished.

The process of the present invention provides a corrosion inhibiting coating on the surface of a metal and may be combined with conventional corrosion inhibition treatments such as the phosphating of iron.

The process of the present invention may be used to provide corrosion inhibition as a pre-treatment before application of a known surface coating. Thus the coating step may be used, for example, to provide temporary protection whilst the metal is being transferred from one site to another. Hence the process of the present invention may be used for the temporary protection of a metal surface and the protective coating subsequently removed before or during further processing. Alternatively, the process of the present invention may be used to form an initial protective coating on a metal surface and subsequently one or more further coatings may be applied to the coated metal surface.

A metal surface coated in accordance with the process which is a further feature if the present invention has an improved resistance to corrosion.

Thus, as a yet further feature of the present invention there is provided a metal article, at least part of one surface of which has a coating which is a condensate of a dihydroxybenzene and an aldehyde or which is a composition as hereinbefore described and which contains a condensate of a dihydroxybenzene and an aldehyde.

The surface of the metal is preferably coated with a composition which contains the condensate and a known corrosion inhibitor.

As a yet further aspect of the present invention the composition is a lubricant composition in contact with metal surfaces which are in relative motion. The lubricant composition, which may be an oil or a grease, provides improved anti-wear characteristics in such a system.

Various aspects of the present invention are set out in more detail hereafter in the following illustrative examples in which all parts and percentages are by weight unless other wise stated.

**Preparation of condensate of dodecyl aldehyde and resourcinol**

The procedure used was essentially as described in J.Am. Chem. Soc (1988) Vol 110, at page 634.

5.5 grammes (0.05mol) of resorcinol and 9.2 grammes (0.05 mol) of dodecyl aldehyde ($C_{11}H_{23}CHO$) were suspended in ethanol (40cm$^3$). The mixture was stirred at 60 °C until dissolution was complete. 10cm$^3$ of concentrated hydrochloric acid (37% by weight hydrogen chloride in water) were then added, and the mixture was heated at reflux for two hours. At all times, the solution remained clear, but the colour changed from pale brown to dark orange. On cooling to ambient temperature (15 to 20 °C) a pale yellow, resinous solid precipitated out. This solid was collected by filtration and recrystallised from hot ethanol (50cm$^3$) to give pale yellow crystals (8.8gm, 64%). The infra red and n.m.r. data for the product were consistent with those reported in the literature for the cyclic tetramer of the formula $[C_6H_2(OH)_2\ CH(C_{11}H_{23})]_4$.

**Preparation of aldehyde/resorcinol condensates**

The procedure described for the preparation of a condensate of dodecyl aldehyde and resorcinol was repeated with the exception that the dodecyl aldehyde was replaced by an equal molar proportion of butanal (butyl aldehyde - $C_3H_7CHO$), heptanal (heptyl aldehyde - $C_6H_{13}CHO$), nonanal (nonyl aldehyde - $C_8H_{17}CHO$) and tetradecanal (tetradecyl aldehyde - $C_{13}H_{27}CHO$).

**Example 1**

The condensate of dodecyl aldehyde and resorcinol, prepared as described, was subjected to a modified Salensky Test as described hereafter. The Salensky Test is described on pages 263 to 266 of "Corrosion Control by Organic Coatings" edited by Henry Leidheiser Jnr., and published in 1981 by NACE.

1.32g of the condensate were added to 58.68g of diphenylether. 30g of 3mm glass beads were added and the mixture was shaken using a paint conditioner manufactured by the Red Devil Manufacturing Company (Model 5410) for 30 minutes. 10cm$^3$ of this mill base was added to a 1oz (28.35g) bottle containing an accurately weighed, freshly cleaned, steel coupon, 2.5cm square. The coupon was suspended (half immersed) in the mill base and 2cm$^3$ of a 3% w/v solution of sodium chloride in water were added. The mixture was then shaken at 40 + 2 °C for 24 hours. The steel coupon was then removed, cleaned and reweighed to obtain the weight loss due to corrosion. This procedure was repeated several times, to obtain an average weight loss. For comparison further experiments were carried out excluding the condensate or in which the condensate was replaced by the same weight of zinc phosphate.

The results obtained are set out in Table One.

**TABLE ONE**

| Example or Comp Ex | Additive (a) | DP (%) (b) |
|---|---|---|
| 1 | D R C | 94 |
| A | Z P | 77 |

**Notes to Table One**

(a) D R C is the dodecyl aldehyde - resorcinol condensate.

Z P is zinc phosphate PZ 40 from Societe Nouvelle des Coulers Zinciques.

(b) Degree of protection (DP) is given by the relationship:-

$$DP = 100\left(1 - \frac{\text{wt loss with additive}}{\text{wt loss with no additive}}\right)$$

**Example 2**

Paints with % wt/wt compositions as set out in Table Two were prepared by shaking together the pigments and extenders (including the various anti-corrosive pigments), white spirit, and about 23% of the binder solution with about 2.5 times of the weight of the other components of 3mm glass beads. Shaking was effected using a paint conditioner manufactured by the Red Devil Manufacturing Company (Model 5410) for 30 minutes. The resulting mill base was let down with the remaining binder solution as supplied. A solution of driers and anti-skinning agent was then added. The paints had a Pigment Volume concentration of 34-36% (assuming the organic-metal salts to have density 2.5g $cm^3$).

TABLE TWO

| Component (a) (c) | Comp A (wt) | Ex.2 (wt) | Comp B (wt) |
|---|---|---|---|
| LA | 40.1 | 40.1 | 40.1 |
| Talc | 7.6 | 7.6 | 7.6 |
| $TiO_2$ | 7.6 | 7.6 | 7.6 |
| By | 31.7 | 12.4 | 16.5 |
| DRC | Nil | 10.7 | Nil |
| ZP | Nil | Nil | 10.1 |
| DAS | 2.1 | 2.1 | 2.1 |
| WS | 10.9 | 10.9 | 10.9 |

**Notes to Table Two**

(a) is as defined in Notes to Table One.

(c) LA is a commercially available linoleic modified alkyd, oil length 55%, based on pentaerythritol and supplied as a 50% solution in white spirit.

Talc used was Micro-Talc ATI from Norweigian Talc.

$Tio_2$ is Tioxide RCR2 from Tioxide Group Ltd.

By is micronised grade barytes from Hopton Mining Co Ltd.

DAS is a mixture of proprietary solutions to give a solution containing 0.8% cobalt, 10% lead and 1.6% calcium (as napthenates) and 5.2% methyl ethyl ketoxime.

WS is white spirit, which is a mixture of predominantly aliphatic hydrocarbons having boiling range 150-200 °C.

A series of paints were prepared by stirring together the paints of Example 2 and Comparative Example B with the paint of Comparative Example A. The resulting paint compositions thus obtained were coated using a draw-down bar onto ground, cold rolled, steel panels, and dried at ambient temperature for two days to give a dry coating thickness of 28 ± 2 micrometers. The panels were scribed according to ASTM 1654 with a vertical line and the scribed panels were exposed for a period of 336 hours to an ASTM B117 salt spray test. After the foregoing exposure treatment, the coating was stripped from the lower half of each plate. The panels were critically compared for rust creep from the scribe line and underfilm corrosion. The results obtained are set out in Table Three.

TABLE THREE

| Ex or comp Ex | Rust creep from scribe (d) (e) | | | Underfilm corrosion (d) (f) | | |
|---|---|---|---|---|---|---|
| | 3:1 | 1:1 | 1 | 3:1 | 1:1 | 1 |
| 2 | 1:31 | 0.89 | 0.20 | A | A | A |
| A | - | - | 7.80 | - | - | D |
| B | 7.30 | 6.10 | 2.08 | D | C | B |

**Notes to Table Three**

(d) 3:1 indicates a mixture of three parts by weight of the paint of Comparative Example A to one part by weight of the paint of the Example or Comparative Example.

1:1 indicates a mixture of equal parts by weight of the point of Comparative Example A and the paint of the Example or Comparative Example.

1 indicates the paint of the Example or Comparative Example was used alone.

(e) Maximum amount (in mm) of rust creep from the scribe mark, according to DIN 53 167.

(f) A indicates no corrosion, that is <1% of the surface.

B indicates slight corrosion, that is 1-10% of the surface.

C indicates moderate corrosion, that is 10-20% of the surface.

D indicates severe corrosion, that is 20-50% of the surface.

**Examples 3 to 11**

Condensates of aldehydes and resorcinol, prepared as described, were tested as anti-wear additives in liquid paraffin. The tests were carried out using a cross-cylinders configuration using a procedure generally as described in Lubrication Engineering, Volume 43 (1987) pages 717 to 722. The test duration was five minutes.

A steel cylinder of 62.1mm diameter and formed from EN 26 steel was rotated against an aluminium cylinder of 16.25mm diameter using a sliding speed of 0.4 $m.s^{-1}$. A load of 49.1N was applied.

Further tests were carried out using the liquid paraffin with no anti-wear additive. The type of additive, the concentration of the additive and the amount of wear are set out in Table Four.

TABLE FOUR

| Example or Comp. Ex. | Additive (a) (h) | | Wear Scar (i) |
|---|---|---|---|
| | Type | (%) | Volume ($mm^3$) |
| 3 | NRC | 1 | 0.196 |
| 4 | NRC | 2 | 0.179 |
| 5 | NRC | 5 | 0.135 |
| 6 | DRC | 1 | 0.127 |
| 7 | DRC | 2 | 0.116 |
| 8 | DRC | 5 | 0.256 |
| 9 | TRC | 1 | 0.157 |
| 10 | TRC | 2 | 0.166 |
| 11 | TRC | 5 | 0.097 |
| C | NIL | NIL | 0.532 |

**Notes to Table Four**

(a) is as defined in Notes to Table One.

(h) NRC is the nonanal-resorcinol condensate
TRC is the tetradecanal-resorcinol condensate.

(i) Wear volume was determined from the wear scar area (determined by measuring the major and minor axes of the elliptical wear scar and calculating the wear area), the radius of the aluminium cylinder and the axis of the wear scar using standard procedures to calculate the volume.

**Examples 12 to 14**

The procedure of ASTM Test Method D 665B was carried out using a 3% w/w aqueous solution of sodium chloride and a 1% w/w solution of an additive, as specified in Table Five, in a water insoluble poly-(oxyalkylene) glycol having a viscosity of 221 cSt at 40°C and available from Imperial Chemical Industries PLC as 'EMKAROX' VG222 lubricant base.

The metal specimens were weighed prior to and at the end of the test in order to determine weight loss. Pass or Fail was also assessed in accordance with the test method. The results are set out in Table Five.

TABLE FIVE

| Example or Comp Ex | Additive | | Wt loss (mg) | Pass or Fail |
|---|---|---|---|---|
| | Type (a) (j) | Amount (%) | | |
| 12 | DRC | 1 | 16.2 | Fail |
| 13 | HRC | 1 | 9.4 | Fail |
| 14 | BRC | 1 | 8.9 | Fail |
| D | NIL | 0 | 25.0 | Fail |

**Notes to Table Five**

(a) is as defined in Notes to Table One.

(j) HRC is trie heptanal-resorcinol condensate

BRC is the butanal-resorcinol condensate.

**Example 15**

The procedure of Examples 12 to 14 was repeated with he exception that a 0.1% w/w solution of DRC in mineral oil (base mineral oil HVI 55 available from Shell) was used rather than a 1% w/w solution of an additive in a poly(oxyalkylene)glycol.

The results are set out in Table Six.

TABLE SIX

| Example or Comp Ex | Additive | | Wt loss (mg) | Pass or Fail |
|---|---|---|---|---|
| | Type (a) | Amount (%) | | |
| 15 | DRC | 0.1 | 0.5 | Fail |
| E | NIL | 0 | 8.2 | Fail |

**Notes to Table Six**

(a) is as defined in Notes to Table One.

## Claims

1. A composition which provides improved wear and corrosion resistance to metal surfaces which comprises
   (a) a lubricant or a surface coating composition; and
   (b) a condensate of a dihydroxybenzene with at least one aldehyde
   wherein the lubricant is selected from a natural oil or natural grease, a petroleum refined product and a poly(oxyalkylene)glycol lubricant, the surface coating composition is or contains a film forming binder system and the condensate is of the type

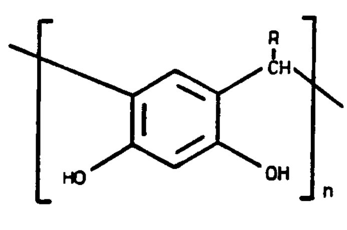

where

R is a hydrogen atom, or a hydrocarbyl, or a substituted hydrocarbyl, group which contains from 1 to 24 carbon atoms; n is an integer which is either 3 or 4 and the condensate is a macrocyclic compound.

2. A composition as claimed in claim 1 wherein (a) is a surface coating composition which includes an alkyd resin, an epoxy resin, an oleoresin, a latex rubber, a chlorinated rubber, a vinyl resin, a polyurethane, a polyester, an organic or inorganic silicate, a polyamide or an acrylic polyester.

3. A composition as claimed in either of claims 1 or 2 which also includes a metal oxide and/or a metal phosphate.

4. A composition as claimed in any one of claims 1 to 3 which contains from 0.1 to 30% by weight of the condensate relative to the total composition.

5. A process which comprises contacting at least one metal surface with a composition as claimed in any one of claims 1 to 4.

6. A metal article at least part of one surface of which has a coating of a composition as claimed in any one of claims 1 to 4.

**Patentansprüche**

1. Zusammensetzung, welche Metalloberflächen eine verbesserte Abnutzungs- und Korrosionsbeständigkeit verleiht und welche folgendes enthält:

(a) ein Gleitmittel oder eine Oberflächenbeschichtungszusammensetzung und

(b) ein Kondensat aus einem Dihydroxybenzol und mindestens einem Aldehyd,

wobei das Gleitmittel aus einem natürlichen Öl oder einem natürlichen Fett, einem raffinierten Erdölprodukt und einem Poly(oxyalkylen)glycol-Gleitmittel ausgewählt ist, wobei die Oberflächenbeschichtungszusammensetzung aus einem filmbildenden Bindersystem besteht oder ein solches enthält und wobei das Kondensat von der Art

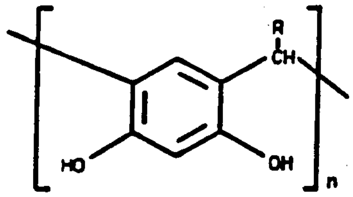

ist, worin R für ein Wasserstoffatom oder eine Kohlenwasserstoff- oder substituierte Kohlenwasserstoffgruppe mit 1 bis 24 Kohlenstoffatomen steht, n für eine der Ganzzahlen 3 oder 4 steht und das Kondensat eine macrocyclische Verbindung ist.

2. Zusammensetzung nach Anspruch 1, bei welcher (a) aus einer Oberflächenbeschichtungszusammensetzung besteht, die ein Alkydharz, ein Epoxyharz, ein Ölharz, einen Latexgummi, einen chlorierten Gummi, ein Vinylharz, ein Polyurethan, einen Polyester, ein organisches oder anorganisches Silicat, ein Polyamid oder einen acrylischen Polyester enthält.

3. Zusammensetzung nach Anspruch 1 oder 2, welche auch ein Metalloxid und/oder ein Metallphosphat enthält.

4. Zusammensetzung nach einem der Ansprüche 1 bis 3, welche 0,1 bis 30 Gew.% von dem Kondensat, bezogen auf die gesamte Zusammensetzung, enthält.

5. Verfahren, bei welchem mindestens eine Metalloberfläche mit einer Zusammensetzung nach einem der Ansprüche 1 bis 4 in Berührung gebracht wird.

6. Metallgegenstand, von dem zumindest ein Teil einer Oberfläche eine Beschichtung aus einer Zusammensetzung nach einem der Ansprüche 1 bis 4 aufweist.

**Revendications**

1. Composition qui confère une résistance à l'usure et à la corrosion améliorée à des surfaces métalliques, qui comprend
   (a) un lubrifiant ou une composition de revêtement de surface ; et
   (b) un produit de condensation d'un dihydroxybenzène avec au moins un aldéhyde,

   dans laquelle le lubrifiant est choisi entre une huile naturelle ou graisse naturelle, un produit de raffinage du pétrole et un poly(oxyalkylène)glycol, la composition de revêtement de surface consistant en, ou contenant, un liant filmogène, et le produit de condensation étant du type

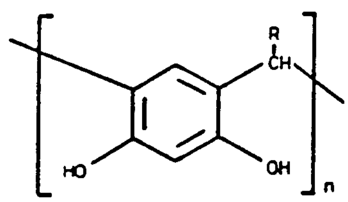

   dans lequel
   R représente un atome d'hydrogène ou un groupe hydrocarbyle ou hydrocarbyle substitué, qui contient 1 à 24 atomes de carbone ; n est un nombre entier égal à 3 ou 4 ; et le produit de condensation est un composé macrocyclique.

2. Composition suivant la revendication 1, dans laquelle le constituant (a) est une composition de revêtement de surface qui comprend une résine alkyde, une résine époxy, une oléorésine, un caoutchouc du type latex, un caoutchouc chloré, une résine vinylique, un polyuréthanne, un polyester, un silicate organique ou inorganique, un polyamide ou un polyester acrylique.

3. Composition suivant l'une des revendications 1 et 2, qui comprend également un oxyde métallique et/ou un phosphate métallique.

4. Composition suivant l'une quelconque des revendications 1 à 3, qui contient 0,1 à 30 % en poids du produit de condensation par rapport à la composition totale.

5. Procédé qui comprend la mise en contact d'au moins une surface métallique avec une composition suivant l'une quelconque des revendications 1 à 4.

6. Article métallique dont au moins une partie d'une surface porte un revêtement d'une composition suivant l'une quelconque des revendications 1 à 4.